# EUROPEAN PATENT APPLICATION

(11) **EP 3 985 816 A1**
(43) Date of publication of application: **20.04.2022**
(21) Application number: 20201735.6
(22) Date of filing: 14.10.2020
(51) Int. Cl.: H02G 3/04, H02G 3/22, H02G 3/08

(54) **PROTECTION SLEEVE**

(71) Applicant: Hilti Aktiengesellschaft, 9494 Schaan (LI)
(72) Inventor: Voss, Brendan, 80798 München (DE); Zientek, Michal Wladyslaw, 9470 Buchs (CH); Moisi, Kleidi, 9472 Grabs (CH)
(74) Representative: Hilti Aktiengesellschaft Corporate Intellectual Property

(57) **Abstract**

The invention concerns a protection sleeve (12), for example for use in a fire-stop pathway. According to the invention it comprises a sheath (14) which can be arranged in a pathway, for example a fire-stop pathway (10), wherein the sheath (14) has an adjustable opening (16), a sensor (18) providing a sensor signal depending on a state of the adjustable opening (16), and a transmitter (20) connected to the sensor (18) for receiving the output signal and configured to transmit the output signal to a receiving device. The invention provides a comfortable way of monitoring the sleeve in regard to its state, in particular in regard to whether it is open or closed or whether additional penetrants can be passed through the protection sleeve (12).

## Description

The present invention relates to a protection sleeve. A fire-protection sleeve is described in US patent application US 2008 / 0128998 A1.

Fire-stop pathways provide the opportunity to install new ceiling, wall, or floor penetrants, for example cables, without compromising the integrity of a fire compartmentation within a building. These fire-stop pathways are in particular demand for use in data center buildings or, generally speaking, in buildings, where new cabling is to be installed or an existing cabling is to be amended regularly. In particular, the penetrants or the cabling pass through a protection sleeve which is arranged inside the fire-stop pathway. The protection sleeve can be opened, so that the area of its cross-section is enlarged, and thus new cabling can be passed through the protection sleeve. To finish, the protection sleeve can be closed, i. e. its cross-section can be shrunk in order to reduce the area of the cross-section to the extent possible.

It thus may accidentally happen, that the protection sleeve is not closed or at least not fully closed after an insertion of new penetrants. Hence, in order to provide a continuous protection, the state of the protection sleeve should be monitored continuously. Notably, it is of outstanding importance to know whether or how much free space or area of its cross-section is left available inside the protection sleeve, and, in particular, whether the protection sleeve is open or closed. At present, the preferred method of monitoring is manual visual inspection, which is error-prone and costly.

Therefore, it is an object of the present invention to provide a protection sleeve that can be monitored in a fail-safe and cost-effective manner.

This is achieved in a number of aspects of the present invention, in which a first aspect is a protection sleeve, comprising a sheath which can be arranged inside a pathway, for example a fire-stop pathway, wherein the sheath has an adjustable opening, a sensor providing a sensor signal depending on a state of the adjustable opening, and a transmitter connected to the sensor for receiving the output signal from the sensor and configured to transmit the output signal to a receiving device.

Thus, a basic idea behind the invention is that the sensor may monitor the adjustable opening and determine its state, for example whether it is open or closed and forward its output signal to the transmitter. Then, the transmitter may send the output signal to a receiving device, where it may be further processed, for example analyzed. If the receiving device is equipped with a display unit, by presenting the output signal or a result of an analysis of the output signal on the display, a user may be informed about the state of the protection sleeve to be monitored, particularly, whether the adjustable opening 16 is open or closed and / or about the available capacity for additional penetrants in the fire-stop pathway.

The sheath may be configured to seal the pathway both with and without the presence of penetrants. Thus, in a preferred embodiment of the invent, the sheath, or at least the adjustable opening, is flexible. Thus, the size of the adjustable opening may be adapted to a variable number of penetrants, for example cables, that shall pass through the protection sleeve.

The sensor may be connected to the transmitter by wire or wirelessly. For the latter, it may comprise a transponder. The transponder may be a passive transponder. It may comprise a tamper loop circuit.

Whereas both the sensor and the transmitter may usually be arranged in, on, adjacent to, or at least near the protection sleeve, the receiver may be at a longer distance from the transmitter. Thus, the transmitter may be configured to communicate with the receiver wirelessly. It is preferred that the communication between the transmitter and the receiver follows a medium-distance or long-distance protocol, for example wireless protocols commonly known as "Bluetooth", "WLAN", "ZigBee" or the like.

If the protection sleeve is re-penetrable, the configuration of penetrants passing through the protection sleeve may be amended, which is an exigence for data center buildings or the like.

A preferred embodiment of the invention is characterized in that the sensor comprises an elastomeric sensor material. An adjustment of the adjustable opening may thus, for example, result in an elastic deformation of the sensor material, which, in turn, may be measured and converted into the output signal.

In particular, if the sensor material comprises a material having at least one electrical property depending on at least one of a deformation of the sensor material, a force acting on or in the sensor material, or a pressure acting on or in the sensor material, such a mechanical quantity can be directly converted into a corresponding electrical quantity.

For this, the electrical property may preferably be a resistance or a capacitance, which can be measured straightforwardly.

Dielectric elastomeric films (DEF) represent a class of materials, which may be elastomeric and may as well provide a deformation-dependent capacitance, which renders them a preferred sensor material for the purposes of the present invention. DEF may have a high elasticity and may thus be subjected to strong deformations. Preferably, DEF may comprise a film based on an elastic elastomer, wherein the film is coated on both sides with flexible electrodes. The elastic elastomer may be at least one of a silicone rubber, an acrylate elastomer, a polyurethane elastomer.

A preferred protection sleeve may comprise a flexible material and / or form. For this, the sheath may comprise an elastic material. Additionally, or in the alternative, the sheath may comprise a fabric or a fabric-like material.

In particular, a section comprising or adjacent to the adjustable opening may comprise a flexible and / or elastic material. For example, the section may comprise an elastomer.

It may comprise a section shaped as truncated cone. In general, it may comprise a tubular body.

Alternatively, the sheath may be box-shaped or at least essentially box-shaped.

The present invention relates to protection sleeves in general. Particularly preferred embodiments of the invention comprise protection sleeves that are configured as at least one of a fire-protection sleeve or a noise-protection sleeve.

The invention will be described further, by way of example, with reference to the accompanying drawings which illustrate preferred embodiments thereof, it being understood that the following description is illustrative of and not limitative of the scope of the invention. The features shown there are not necessarily to be understood to scale and are presented in such a way that the special features of the invention are clearly visible. The various features may be realized individually or in combination in any desired way in variants of the invention.

### In the drawings:

- Figure 1: shows a cross-sectional view on a fire-stop pathway with a protection sleeve;
- Figure 2: shows a cross-sectional view on another fire-stop pathway with another protection sleeve;
- Figure 3: shows a cross-sectional view on the fire-stop pathway according to figure 2 with a plurality of penetrants passing through the protection sleeve;
- Figure 4: shows a front view of another protection sleeve; and
- Figure 5: shows a front view of the protection sleeve according to figure 4, with a plurality of penetrants passing through the protection sleeve;

Same reference signs are used for functionally equivalent elements in all figures.

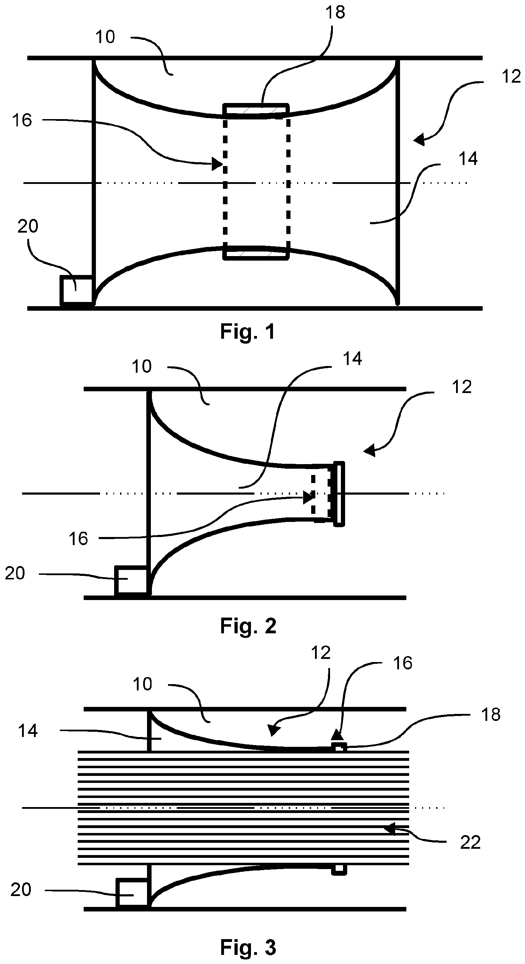

**Figure 1** schematically shows a cross-sectional view of a fire-stop pathway **10** with a protection sleeve **12.**

The protection sleeve 12 comprises a sheath **14** which is arranged inside the fire-stop pathway 10. The sheath 14 is formed as a tubular body comprising two truncated cones opposing one another. The sheath 14 acts to seal the fire-stop pathway 10, preferably both with and without the presence of penetrants.

It is made of a flexible, elastomeric material. Thus, its tubular body forms an adjustable opening **16** in a section in the middle of the sheath 14 (in figure 1 schematically represented by dashed lines).

A ring-shaped sensor 18 surrounds the sheath 14 along an outer side of the section comprising the adjustable opening 16. The sensor comprises a sensor material. The sensor material is a dielectric elastomer film. Hence, by widening or shrinking the adjustable opening 16, the sensor 18 is stretched or, respectively, shrunk and thus changes its electrical capacitance.

The sensor 18 further comprises a passive transponder. The resonance frequency of the transponder is tuned depending on the capacitance provided by the sensor material and thus depending on the state of the adjustable opening 16. The resonance frequency is thus an output signal of the sensor 18.

A transmitter 20 is configured to connect to the transponder of the sensor 18. In particular, the transmitter 20 measures the resonance frequency of the sensor 18 by emitting and receiving radio signals.

The transmitter 20 transduces the output signal and emits a corresponding wireless signal. The wireless signal, for example a WLAN- or Bluetooth-Signal, may then be received by a receiver (not shown in figure 1) and presented to a user in order to inform the user about the state of the adjustable opening 16 and, hence, of the protection sleeve 12.

The following figures present further embodiments of the protection sleeve 12. Unless otherwise described, these embodiments correspond, in principle, to the embodiment previously described, so that, without prejudice of other features and advantages, the following description focuses on characteristic features of these embodiments.

**Figures 2 and 3** show a protection sleeve 12 arranged inside a fire-stop pathway 10, wherein its sheath 14 is shaped as a truncated cone. Its sensor 18, which is ring-shaped and strain-sensitive as the previously described sensor 18 according to figure 1, is arranged at a free end of the sheath 14. In this embodiment, a section of the sheath 14 adjacent to the free end of the sheath 14 represents the adjustable opening 16.

A transmitter 20 is located at an end of the sheath 14 opposite to its free end.

Whereas figure 2 shows a situation wherein the fire-stop pathway 10 is empty, i. e. no penetrants pass through the protection sleeve 12 and the available capacity for additional penetrants is at a maximum, figure 3 shows a situation wherein the fire-stop pathway 10 and, in particular, the protection sleeve 12, is filled with penetrants **22,** for example a bundle of cables.

As can be seen from a comparison between the figures 2 and 3, by introducing the penetrants 22, the adjustable opening 16 or, respectively, the corresponding section of the sheath 14 widens and stretches the sensor 18.

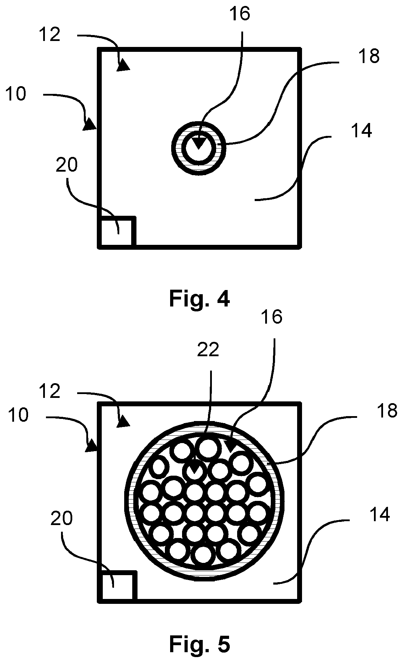

**Figures 4 and 5** schematically show a front view of another fire-protection pathway 10, which is sealed by another embodiment of a protection sleeve 12.

The fire-protection pathway 10 and, thus, the protection sleeve 12 according to this embodiment are box-shaped or at least essentially box-shaped.

The protection sleeve 12 comprises a sheath 14 having a circular adjustable opening 16. The adjustable opening 16 is surrounded by a ring-shaped sensor 18 (marked with hatchings).

As is shown in figure 5, penetrants 22, which may comprise a bundle of cables, are passed through the protection sleeve 12, which widens the sheath 14 with its adjustable opening 16 and thereby stretches the strain-sensitive sensor 18.

In this embodiment, a transmitter 20 is arranged at a front side of the fire-stop pathway 14. As in all of the described embodiments, it is configured to communicate with the sensor 18 in order to read out its output value, for example a resonance frequency, convert it appropriately and send it wirelessly to a receiver (not shown in figures 4 and 5) in order to inform a user about the state of the protection sleeve 12.

In all of the embodiments previously described, the sleeves 12 are configured as fire-protection and noise-protection sleeves and thus are preferably made of fire-proof and noise-damping, materials. Preferably, the sleeves 12 are configured to reduce noise passing through the fire-stop pathway 10 by at least 3 dB and, particularly preferably, by at least 12 dB.

## Claims

1. **Protection sleeve** (12), comprising
- a sheath (14) which can be arranged in a pathway, for example a fire-stop pathway (10), wherein the sheath (14) has an adjustable opening (16),
- a sensor (18) providing a sensor signal depending on a state of the adjustable opening (16), and
- a transmitter (20) connected to the sensor (18) for receiving the output signal and configured to transmit the output signal to a receiving device.

2. Protection sleeve according to claim 1, **characterized in that** the sensor (18) comprises an elastomeric sensor material.

3. Protection sleeve according to one of the preceding claims, **characterized in that** the sensor material comprises a material having at least one electrical property depending on at least one of a deformation of the sensor material, a force acting on or in the sensor material, or a pressure acting on or in the sensor material.

4. Protection sleeve according to one of the preceding claims, **characterized in that** the electrical property is a resistance or a capacitance.

5. Protection sleeve according to one of the preceding claims, **characterized in that** the sensor material comprises a dielectric elastomeric film.

6. Protection sleeve according to one of the preceding claims, **characterized in that** the sheath (14) comprises an elastic material.

7. Protection sleeve according to one of the preceding claims, **characterized in that** the sheath (14) comprises a fabric or a fabric-like material.

8. Protection sleeve according to one of the preceding claims, **characterized in that** the sheath (14) comprises a section shaped as truncated cone.

9. Protection sleeve according to one of the preceding claims, **characterized in that** the sheath (14) is box-shaped or at least essentially box-shaped.

10. Protection sleeve according to one of the preceding claims, **characterized in that** the protection sleeve (14) is configured as at least one of a fire-protection sleeve or a noise-protection sleeve.
